# EUROPÄISCHE PATENTSCHRIFT

(11) **EP 0 941 925 B1**
(45) Veröffentlichungstag und Bekanntmachung des Hinweises auf die Patenterteilung: **13.08.2003**
(21) Anmeldenummer: 99100547.1
(22) Anmeldetag: 13.01.1999
(51) Int. Cl.: B64G 1/40, F17C 7/02, F17C 13/00, F02K 9/60, F02K 9/50

(54) **Treibstofftank**
Propellant tank
Réservoir de propergol

(30) Priorität: 12.03.1998 DE 19810638
(43) Veröffentlichungstag der Anmeldung: 15.09.1999
(73) Patentinhaber: DaimlerChrysler Aerospace AG, 85521 Ottobrunn (DE)
(72) Erfinder: Schwarting, Walter, 26127 Oldenburg (DE)
(74) Vertreter: Hansmann, Dierk, Dipl.-Ing.

(56) Entgegenhaltungen:
- WO-A-97/04231
- DE-A- 4 027 306
- GB-A- 2 264 684
- US-A- 4 216 881

## Beschreibung

Die Erfindung betrifft einen Behälter zur getrennten Aufnahme eines flüssigen Mediums sowie eines gasförmigen Mediums als Fördergas, insbesondere einen Tank zur Lagerung von Treibstoffen und Oxydatoren für den Betrieb von Triebwerken in Raumflugkörpern. Der Behälten weist wenigstens einer den Tankinnenraum in Teilräume unterteilenden membranförmigen Trennwand auf. Einen solchen Behälter zeigt die Druckschrift DE-4 027 306 A.

Zur Lagekorrektur bzw. -stabilisierung von Satelliten und Orbitalstationen werden vielfach Triebwerke benutzt, die durch geringe, exakt dosierbare Impulse die erforderlichen Korrekturbewegungen bewirken. Für den Betrieb dieser Triebwerke führen die Raumflugkörper in Treibstofftanks entsprechende, meist flüssige Treibstoffe und gegebenenfalls Oxidatoren mit sich. Zum Austreiben der Treibstoffe und Oxidatoren aus den Tanks werden im allgemeinen Druckgase verwendet, bei denen das Problem besteht, daß diese sich mit den Treibstoffen oder Oxidatoren mischen können.

Um eine Trennung zwischen den Druckgasen und dem Treibstoff bzw. Oxidator zur gewährleisten, werden die Treibstofftanks mittels flexibler Membranen in zwei oder mehr Teilräume unterteilt, von denen der eine den Treibstoff oder Oxidator enthält und der andere Teilraum mit dem Druckgas beaufschlagt wird, dessen Förderdruck über die Membran auf den Treibstoff wirkt.

Insbesondere bei Raketen- und Satellitentreibstoffen auf der Basis von Hydrazin und bei Oxidatoren auf der Basis von Stickstofftetroxid erfolgt die Trennung dieser Stoffe vom beaufschlagenden Druck- oder Fördergas in der Regel durch Polymermembranen. Bei derartigen Polymerwerkstoffen ist eine Permeation von Treibstoff- oder Oxydatordämpfen durch die Membran hindurch in den das Druckgas enthaltenden Teilraum nicht vollständig zu vermeiden. Dieser Vorgang wird insbesondere durch die in jedem technischen System unvermeidlichen Temperaturschwankungen und deren Einfluß auf die unterschiedlichen Wärmekapazitäten von flüssigem Treibstoff bzw. Oxidator und gasförmigem Fördermedium begünstigt. Die auf diese Weise in den Gasraum gelangenden Dämpfe kondensieren dort, wodurch es zu einem nicht unerheblichen Verlust an Treibstoff bzw. Oxydator kommen kann. Dieser ließe sich dadurch verhindern, daß anstelle der durchlässigen Polymermembranen solche aus nicht durchlässigen Werkstoffen verwendet würden. Diese Forderung würden im wesentlichen nur Metallmembranen erfüllen, bei denen es jedoch infolge der häufigen Verformungsvorgänge mit starken Deformationen schnell zu Materialermüdung und damit zu Rißbildung kommen könnte.

Aufgabe der Erfindung ist es daher, einen Treibstofftank der eingangs genannten Art so auszubilden, daß die Permeation von Treibstoff- bzw. Oxydatordämpfen in den das Fördergas enthaltenden Teilraum auf ein absolutes Minimum reduziert wird.

Die Erfindung löst diese Aufgabe, indem sie vorsieht, daß bei einem derartigen Treibstofftank der zur Aufnahme des gasförmigen Fördermediums vorgesehene Teilraum mit einer Vorrichtung zur Einstellung und Aufrechterhaltung einer gegenüber der Temperatur des flüssigen Mediums höheren Temperatur ausgestattet ist, gemäß dem Gegenstand des Anspruchs 1.

Dadurch, daß bei dem erfindungsgemäßen Behälter der das gasförmige Fördermedium enthaltende Teilraum ständig bei einer Temperatur gehalten wird, die höher ist als die Temperatur des flüssigen Mediums, wird die Möglichkeit einer Kondensation der Treibstoff- bzw. Oxydatordämpfe in diesem Teilraum zuverlässig vermieden. Der Behälter nach der Erfindung ist dabei zwar in erster Linie für den Einsatz in Raketen- und Satellitensystemen geeignet, er kann aber im Prinzip in allen Fällen eingesetzt werden, in denen ein Transport sowie eine druckgesteuerte Entnahme eines flüssigen Mediums vorgesehen ist.

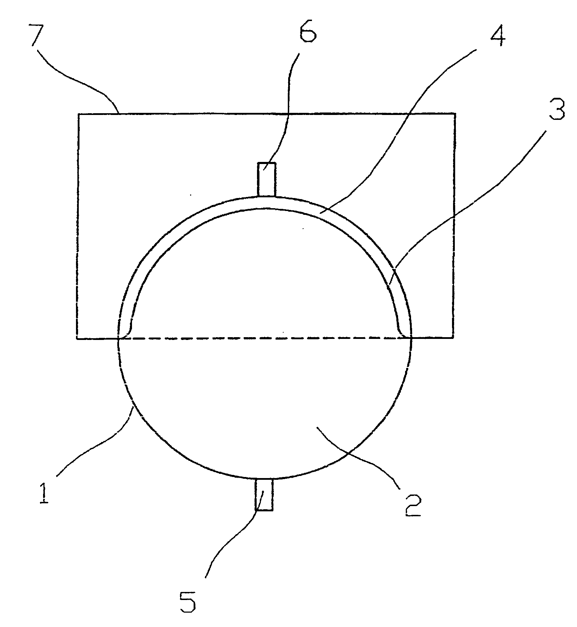

Nachfolgend soll die Erfindung anhand eines in der Zeichnung dargestellten Ausführungsbeispiels näher erläutert werden. Die Figur zeigt dabei in prinzipieller Darstellung einen vertikalen Schnitt durch einen kugelförmigen Behälter 1 zur Aufnahme eines flüssigen Mediums 2. Dieses Fluid ist durch eine halbkugelförmige Polymermembran 3 von einem Teilraum 4 getrennt, der ein gasförmiges Medium enthält, das als Fördergas zum Austreiben des flüssigen Mediums 2 über einen Stutzen 5 dient. Die Zufuhr des Fördergases, bei dem es sich um ein Inertgas, wie Stickstoff oder Helium, handelt, erfolgt über einen weiteren Stutzen 6.

Wie aus der Figur erkennbar, ist der Behälter 1, bei dem es sich im Fall des hier beschriebenen Ausführungsbeispiels um einen Tank zur Aufnahme von Hydrazin für ein Lageregelungstriebwerk eines Satelliten bzw. einer Orbitstation handelt, auf demjenigen Teil seiner Außenfläche, unter dem sich der Teilraum 4 mit dem Fördergas befindet, von einer Vorrichtung 7 zur Temperaturregulierung umgeben. Mit Hilfe einer elektrisch betriebenen Kontroll- und Aufheizeinrichtung wird dieser Teilbereich des Behälters 1 bereits vor dem Betanken gegenüber der Temperatur des flüssigen Mediums 2 leicht vorgewärmt und in der Folge ständig auf einer Temperatur gehalten, die geringfügig, vorzugsweise etwa 3 Grad, oberhalb der Flüssigkeitstemperatur liegt.

Zwar diffundiert infolge der nicht vollständig zu verhindernden Permeation im Laufe der Zeit Treibstoffdampf durch die Membran 3 hindurch in den Teilraum 4, jedoch ist die Flüssigkeit 2 der kälteste Ort und, wegen der Temperaturabhängigkeit des Dampfdruckes; damit zugleich der Ort mit dem niedrigsten Partialdruck. Die in den Teilraum 4 eintretenden Treibstoffdämpfe nehmen denjenigen Dampfdruck an, den die Temperatur des flüssigen Mediums 2 vorgibt.

Da die Temperatur des Fördergases im Teilraum 4 ständig auf einem Wert oberhalb der Temperatur des flüssigen Mediums 2 und damit auch oberhalb des Gleichgewichtswertes der Dampfdruckkurve gehalten wird, ist eine Kondensation praktisch ausgeschlossen. Damit entfällt aber zugleich der Druckgradient für die Treibstoffdämpfe als treibende Kraft für den Permeationsvorgang durch die Membran 3, und dieser Vorgang kommt zum Erliegen, so daß es zu praktisch keinem Treibstoffverlust mehr kommt. Wichtig für die Erzielung dieses Effektes ist es dabei, die Oberflächentemperatur der Membran 3 so zu beeinflussen, daß diese stets auf ihrer fördergasseitigen Oberfläche eine geringfügig höhere Temperatur als auf der Fluidseite aufweist.

Die Temperatur der Gasseite nimmt aufgrund von Wärmetransport einen Einfluß auf die Temperatur der Membranoberfläche. Dieses geschieht in dem Maße wie die Temperatur der Flüssigkeitsseite aufgrund der Wärmeleitfähigkeit des Membranmaterials eingreift. Damit wird erkennbar, daß es von der Wärmeleiteigenschaft der verwendeten Membran abhängt, mit welchem Temperaturunterschied die Gasseite wärmer zu halten ist, als die zur Flüssigkeit gewandte Membranoberfläche momentan ist. Kondensation kann bereits durch geringen Temperaturunterschied (wenige Grad Celsius) zwischen der gasseitigen Oberfläche und der flüssigkeitsseitigen Gleichgewichtstemperatur verhindert werden.

## Patentansprüche

1. Behälter (1) zur getrennten Aufnahme eines flüssigen Mediums (2) sowie eines gasförmigen Mediums als Fördergas, insbesondere Tank zur Lagerung von Treibstoffen und Oxydatoren für den Betrieb von Triebwerken in Raumflugkörpern, mit wenigstens einer den Tankinnenraum in Teilräume unterteilenden membranförmigen Trennwand (3), **dadurch gekennzeichnet, daß** der für die Aufnahme des gasförmigen Fördermediums vorgesehene Teilraum (4) mit einer Vorrichtung (7) zur Einstellung und Aufrechterhaltung einer gegenüber der Temperatur des flüssigen Mediums (2) höheren Temperatur ausgestattet ist.

2. Behälter nach Anspruch 1, **dadurch gekennzeichnet, daß** die Vorrichtung (7) eine elektrische Aufheizeinrichtung umfaßt.

3. Behälter nach Anspruch 1 oder 2, **dadurch gekennzeichnet, daß** die Temperaturdifferenz auf eine geringe Gradzahl einstellbar ist.

## Claims

1. A container (1) for separately accommodating a liquid medium (2) and a gaseous medium as carrier gas, in particular a tank for storing fuels and oxidants for operating engines in spacecraft, having at least one membrane-type partition wall (3) dividing the inside of the tank into sub-chambers, **characterised in that** the sub-chamber (4) provided for accommodating the gaseous carrier medium is equipped with a device (7) for setting and maintaining a higher temperature than the temperature of the liquid medium (2).

2. A container according to claim 1, **characterised in that** the device (7) comprises an electrical heating means.

3. A container according to claim 1 or claim 2, **characterised in that** the temperature difference may be set to a low number of degrees.

## Revendications

1. Récipient (1) pour recueillir séparément un milieu liquide (2) ainsi qu'un milieu gazeux comme gaz propulseur, en particulier un réservoir pour le stockage de carburants et d'oxydants pour le fonctionnement de mécanismes moteurs dans des engins spatiaux, comprenant au moins une paroi séparatrice (3) en forme de membrane subdivisant l'espace intérieur du réservoir en espaces partiels, **caractérisé en ce que** l'espace partiel (4) prévu pour recueillir le milieu propulseur gazeux est équipé d'un dispositif (7) pour instaurer et maintenir une température plus élevée par rapport à la température du milieu liquide (2).

2. Récipient selon la revendication 1, **caractérisé en ce que** le dispositif (7) comprend un dispositif de chauffage électrique.

3. Récipient selon la revendication 1 ou 2, **caractérisé en ce que** la différence de température peut être réglée à une moindre valeur.
